# EUROPEAN PATENT SPECIFICATION

(11) **EP 0 836 578 B1**
(45) Date of publication and mention of the grant of the patent: **28.05.2003**
(21) Application number: 96922363.5
(22) Date of filing: 03.07.1996
(51) Int. Cl.: B65G 17/08, B65G 21/18

(54) **CONVEYOR BELT**
FÖRDERBAND
BANDE TRANSPORTEUSE

(30) Priority: 04.07.1995 SE 9502423
(43) Date of publication of application: 22.04.1998
(73) Proprietor: FRIGOSCANDIA EQUIPMENT AKTIEBOLAG, 251 09 Helsingborg (SE)
(72) Inventor: OLSSON, Lennart, S-260 41 Nyhamnsläge (SE)
(74) Representative: Berglund, Gustav Arthur
(86) International application number: SE9600898
(87) International publication number: WO97002197

(56) References cited:
- WO-A-91/04209
- US-A- 3 659 697
- US-A- 4 981 208
- US-A- 5 318 169

## Description

This invention generally relates to a conveyor belt comprising a plurality of interconnected elements which are arranged successively in the longitudinal direction of the conveyor belt and which are movable relative to each other at least about axes extending transversely of the longitudinal direction of the conveyor belt and in parallel with the plane of the conveyor belt.

Conveyor belts of this kind (WO 91/04209 A) can be, for instance, chain-type belts or of the type having a plurality of transverse rods carrying a wire netting. In many cases however, prior art conveyor belts do not have the properties that are desirable in respect of manufacture, operation and maintenance.

Thus it is desirable for the conveyor belt to have such a relatively simple design as to allow essentially automatic manufacture based on a small number of components. It is also desirable for the conveyor belt to have such rigidity in the transverse direction that although supported merely at its lateral edges, it is capable of carrying considerable loads.

For many delicate products, it is also important for the conveyor belt to have a very even carrying surface at the same time as this carrying surface may have to be foraminous, e.g. for permitting an air flow transversely of the plane of the conveyor belt. For conveyor belts in the food industry, it is also important that all surfaces of the conveyor belt are relatively easy of access, such that the conveyor belt can be readily and safely cleaned during operation.

Although many conveyor belts travel merely in rectilinear paths and round guide rollers, it is in many contexts desirable that a conveyor belt is movable in all directions, i.e. also can follow curves in its own plane, thereby rendering a helical path for the conveyor belt possible.

The object of the present invention therefore is to provide a conveyor belt which has at least the main part of the above-mentioned properties.

According to the invention, this object is achieved by the conveyor belt of the type mentioned by way of introduction being characterised in that the elements are alternatingly of a first type and a second type, that each element of the first type has a bar extended substantially in parallel with the axes and having a plurality of opposite projections which are T-shaped, have their T stem extended substantially in the longitudinal direction of the conveyor belt and their T head extended at a distance from and substantially along the bar, and that each element of the second type is in the form of a beam of inversed U-shape with downwardly directed flanges and a web which connects the flanges and has openings of a smaller width than the T heads for receiving the same by a reciprocating movement in the direction of the extent of the T heads relative to an element of the first type, or for receiving the T heads via parts of the openings of at least the same width as the T heads.

The inventive construction of the conveyor belt thus implies that the conveyor belt, apart from lateral edge components, if any, consists of only two types of element of such a design that a highly automated manufacture is possible. Moreover, the belt will have an exceedingly even carrying surface, while the rigidity in the transverse direction can be made very high owing to every second element being a U beam. By dimensioning the openings in a suitable fashion, the inventive conveyor belt can also travel along curves in the plane of the belt, in which case the elements are telescoped more and more in the direction of the inner lateral edge of the conveyor belt in the curve.

In order to achieve as great rigidity as possible in the transverse direction of the belt, the flanges of the inversely U-shaped beam are essentially unbroken. The rigidity of the beam can be further improved by its flanges being bent in V-shape along a line extending in parallel with the longitudinal direction of the beam.

In a preferred embodiment, the T heads are downwardly bent relative to a plane formed of the bar and the T stems. This results in a completely even carrying surface of the conveyor belt and a maximum telescoping of the elements of the two types such that the conveyor belt can travel through relatively narrow curves in its own plane.

To facilitate the fitting of an element of the first type to an element of the second type by a reciprocating movement, each opening in the beam has an extent in the longitudinal direction of the beam which is smaller than the extent of the T head and greater than half the sum of the extent of the T head and the T stem in the same direction. Furthermore each opening in the beam is of an extent in the longitudinal direction of the conveyor belt which is greater than the extent of the T head and smaller than or preferably equal to the extent of the beam in the same direction. According to the latter variant, i.e. when the openings extend over the entire width of the beam, a maximum telescoping of the elements of the first and the second type is rendered possible.

The elements of the two types can be made of metal, e.g. spring steel, but they may also be made of plastic or a combination of metal and plastic.

A number of embodiments of the present invention will now be described in more detail with reference to the accompanying drawings, in which:
Fig. 1 is a perspective view of part of a conveyor belt according to a first embodiment of the present invention;
Fig. 2 is a cross-sectional view taken along line II-II in Fig. 1;
Fig. 3 is a cross-sectional view taken along line III-III in Fig. 1;
Figs 4 and 5 are cross-sectional views of the conveyor belt in Fig. 1, fitted with side plates;
Figs 6 and 7 are perspective views of a second embodiment of a conveyor belt according to the present invention;
Fig. 8 is a perspective view of a third embodiment of a conveyor belt according to the present invention;
Figs 9-11 are perspective views of components included in the conveyor belt according to Fig. 8;
Figs 12 and 13 are perspective views of part of the conveyor belt in Fig. 8, fitted with side plates;
Fig. 14 is a top plan view of a further embodiment of a conveyor belt according to the invention; and
Fig. 15 is a top plan view of one more embodiment of a conveyor belt according to the invention.

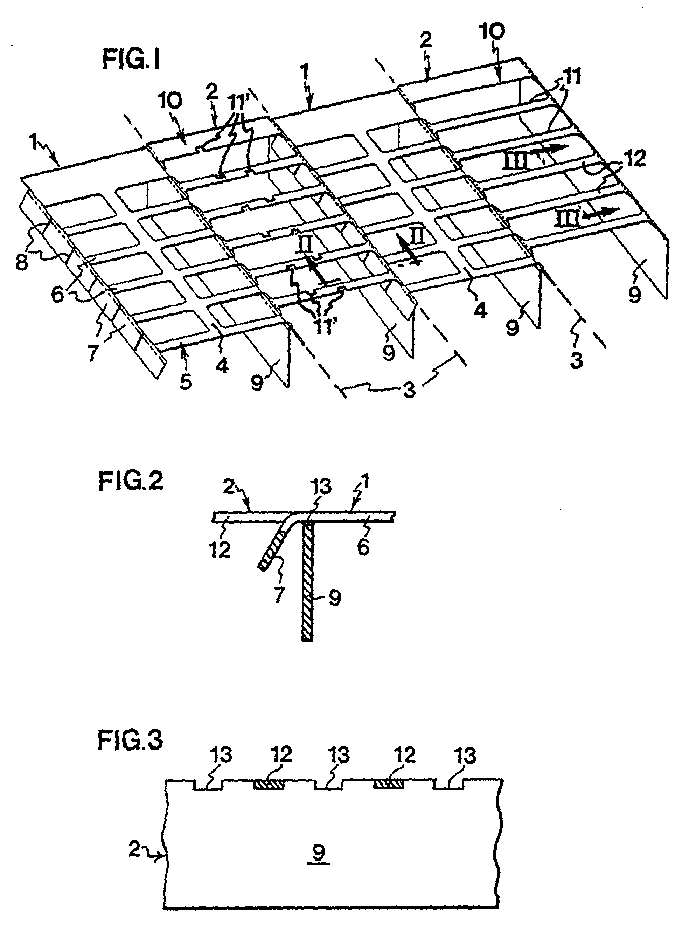

The embodiment of a conveyor belt according to the present invention as shown in Figs 1-3 comprises elements 1 of a first type, which alternate in the longitudinal direction of the conveyor belt with elements 2 of a second type. The elements 1, 2 are interconnected and also movable relative to each other about axes 3 extending transversely of the longitudinal direction of the conveyor belt and in parallel with the plane of the conveyor belt.

Each element 1 of the first type has a bar 4 extending in parallel with the axes 3 and having a plurality of opposite projections 5 which are T-shaped. The T stem 6 of each T-shaped projection is extended in the longitudinal direction of the conveyor belt, and its T head 7 is extended at a distance from and substantially along the bar 4. The T heads 7 on each side of the bar 4 can be considered a side bar, which, by slots 8, is divided into the T heads 7. However, it should be noted that the T heads 7 must not necessarily adjoin each other, but they can be spaced apart in the longitudinal direction of the bar 4. Further, the element 1 need not be symmetric about the bar 4, as the one shown in Fig. 1, but on the one hand the bar 4 can be unsymmetrically arranged and, on the other hand, the opposite, T-shaped projections on both sides of the bar 4 can be offset relative to each other in the longitudinal direction of the bar 4.

As shown in more detail in Fig. 2, the T heads 7 are downwardly bent from the plane formed of the bar 4 and the T stems 6. This permits rotation of each element 1 relative to the adjoining elements 2 about their respective axes 3.

Each of the elements 2 is in the form of an inversely U-shaped beam with flanges 9 and a web 10 connecting the flanges. The web 10 has openings 11 for receiving the T heads 7. The insertion of the heads 7 into the openings 11 takes place more precisely by a reciprocating movement between the elements 1 and 2 in the direction of the extent of the T heads. The element 1 is positioned with the T heads on top of the openings 11 of the element 2 and with the slots 8 adjacent to a lateral edge of the openings 11. The same end of every T head 7 is then slightly pressed down, while the element 1 is displaced laterally relative to the element 2 until the T heads snap into the openings 11, whereupon the element 1 is moved back until the T stems are centred in the openings 11. To permit this operation, every opening 11 is centred relative to a corresponding projection 5. Moreover, every opening 11 is of an extent in the longitudinal direction of the element 2, which is smaller than the extent of the T head 7 and greater than half the sum of the extent of the T head 7 and the T stem 6 in the same direction.

In order to permit telescoping of the elements 1 and 2, the openings 11 extend over the entire width of the elements 2. To permit the interconnection of the elements 1 and 2, every opening 11 in the element 1, however, only need an extent in the longitudinal direction of the conveyor belt, which is slightly greater than the extent of the T head 7 in the same direction. Such a design is convenient when the conveyor belt need not be able to travel through curves in its own plane. On the other hand, in the embodiment illustrated in Fig. 1 the elements 1 and 2 are collapsible, the elements 1 and 2 being locked to each other by the ends of the T heads 7 being positioned below crossbars 12 of adjoining elements 2, said crossbars 12 defining the openings 11.

When the openings 11 extend over at least part of the width of the elements 2, the heads 7 can alternatively be inserted in the openings 11 through cuts 11' in the sides of the openings 11, such that part of each opening has at least the same width as the corresponding T head 7. The cuts 11' located opposite each other in an opening 11 are suitably offset in the direction of the crossbars 12 relative to the cuts 11' in neighbouring openings 11 so as not to unnecessarily weaken the crossbars 12.

As shown in Fig. 3, the openings 11 have at their short sides central recesses 13 at the upper edge of the side flanges 9, said recesses being of the same width as or a slightly greater width than the T stems 6 to make it possible for the T stems to be received in the recesses 13, as shown in Fig. 2. With this design, the top faces of the elements 1 and 2 will be completely aligned with each other. It should be noted that the bending-down of the T heads 7 is carried out in such a manner that the T heads 7 are positioned a distance below the crossbars 12, such that the conveyor belt can travel round a guide roller with an axis in parallel with the axes 3, and the elements 1 and 2 can telescope relative to each other while maintaining their vertical position. It will be appreciated that the depth of the recesses 13 for this purpose conforms with the thickness of the T stems 6.

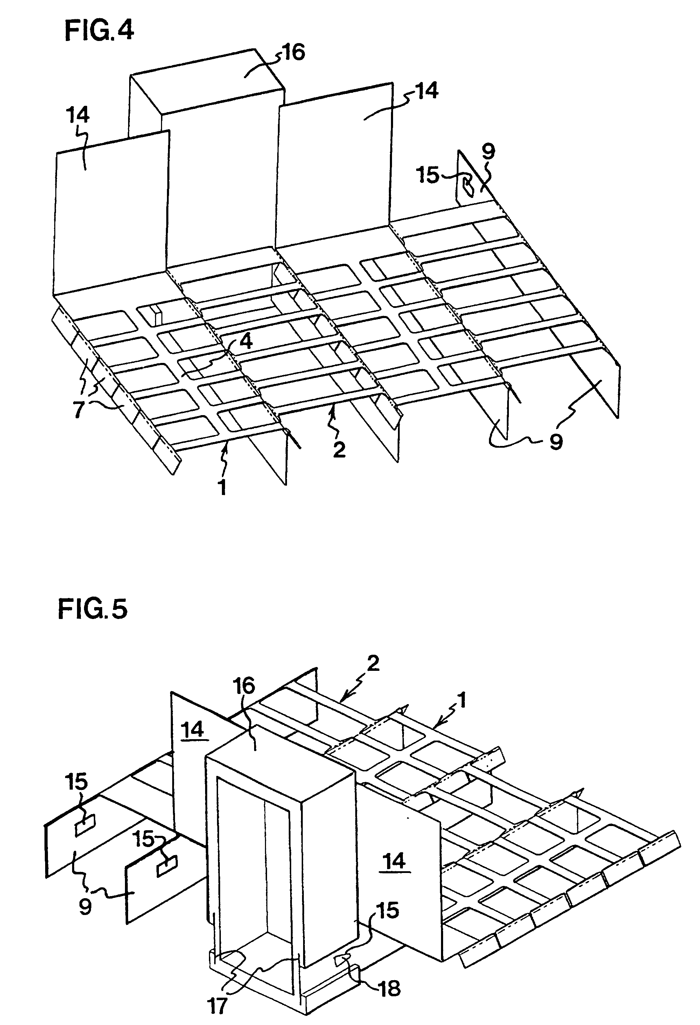

As illustrated in Figs 4 and 5, the ends of the elements 1 can be designed as side plates 14 which are upwardly bent perpendicularly to the plane of the conveyor belt and which are of the same width as the element 1 between the heads 7 on each side of the bar 4. In order to complete the side wall of the conveyor belt, the ends of the elements 2 may consist merely of the flanges 9 each having an opening 15. A box-shaped side plate 16 having lateral grooves 17 receiving the ends of the flanges is pushable onto these projecting flanges 9, by snapping into the openings 15, and resilient tongues 18 of the side plate 16 fix the position of the side plate 16 relative to the element 2.

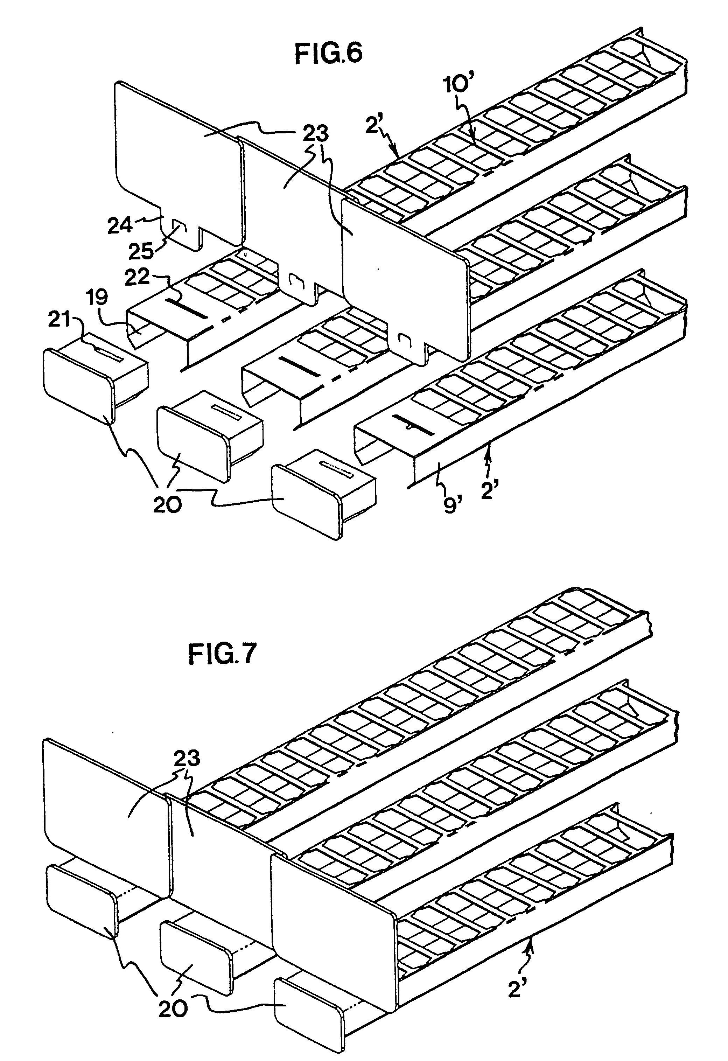

Figs 6 and 7 illustrate a second embodiment of a conveyor belt according to the present invention. These Figures show the element 2' only, since the elements 1 shown in Fig. 1 are also usable in this embodiment. The elements 2' differ from the elements 2 by the flanges 9' being bent in V-shape along a line 19 in parallel with the longitudinal direction of the element 2'. The two lower portions of the flanges 9' of each element 2' are more precisely inwardly bent towards each other, as shown in Fig. 6. As a result, the U beam forming the element 2' attains an increased rigidity against, above all, rotation about its own longitudinal direction.

The embodiment shown in Figs 6 and 7 also differs from the embodiment shown in Figs 1-5 by the design of the possible side walls of the conveyor belt. More specifically, a bush 20 of the same cross-sectional shape as the U beam is insertable into the end of each element 2'. In the inserted position of the bush 20, a slot 21 in the bush and a slot 22 in the top face of the element 2' are positioned exactly opposite each other, such that a flat side plate 23 with a projection 24 of the same width as the length of the slots 21 and 22 can be pressed down through the slots 21 and 22. A resilient tongue 25 on the projection 24 snaps out inside the slot 21 and thus locks the bush 20 and the side plate 23 to the element 2'. The side plates 23 are of an extent in the longitudinal direction of the conveyor belt, that is sufficient for their overlapping each other. In the embodiment shown in Figs 6 and 7, the elements 1 thus need not have the upwardly bent portions 14.

The embodiments of an inventive conveyor belt as shown in Figs 1-7 are preferably made of metal, suitably stainless spring steel. However, it is also possible to manufacture the elements 1 as well as the elements 2 of plastic or possibly only the elements 1 of plastic, whereas the elements 2 are made of metal.

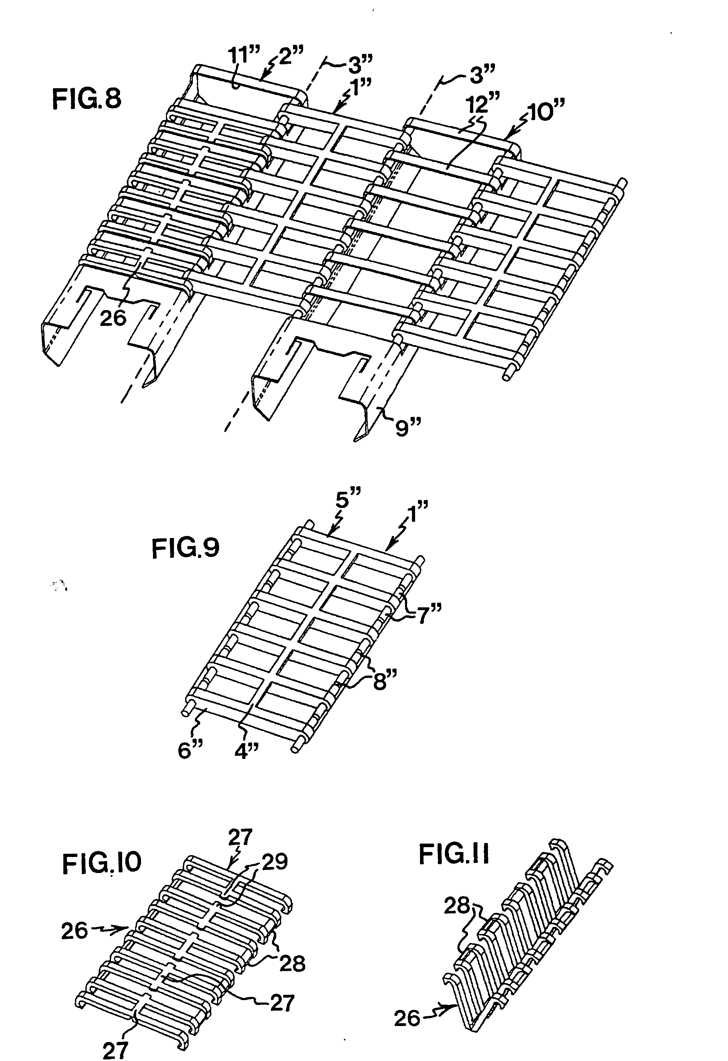

In the embodiment of an inventive conveyor belt as shown in Figs 8-13, the elements 2" are of substantially the same cross-sectional shape as the elements 2'. The intermediate elements 1" are essentially of the same shape as the elements 1, but they are made of plastic and the parts of the T head 7" that project from each T stem 6" are circular in cross-section. The recesses at the short sides of the openings 11", i.e. in the upper edges of the flanges 9", are besides somewhat greater in consequence of the greater thickness of the T stems 6".

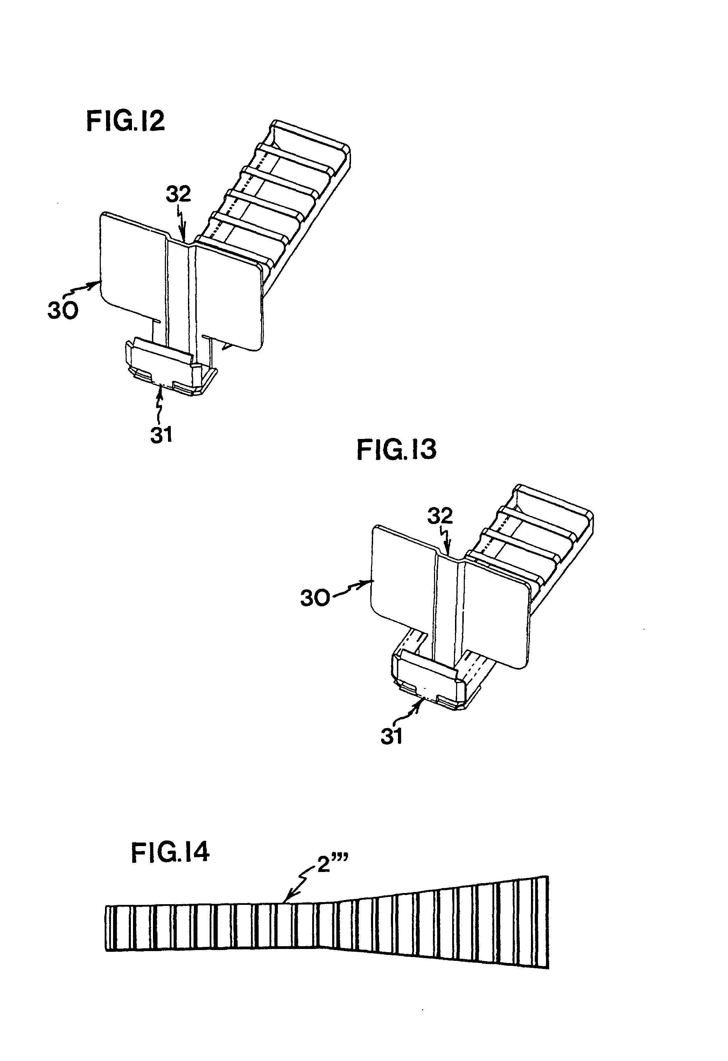

In the embodiment illustrated in Figs 8-13, every element 2" has a lining 26 of plastic in its openings 11". The lining 26 comprises, more specifically, H-shaped portions 27, which are interconnected in a row by means of connecting portions 28 at the outer ends of neighbouring stems. The portions 28 are bent and their cross-section is in the form of an internal circular arc conforming with the cross-section of the free ends of the T heads 7". As shown in Fig. 11, the lining 27 is foldable about its centre line and can thus be pushed up from the interior of the U-beam-shaped element 2" to the position shown in Fig. 8, where lugs 29 which project in the longitudinal direction of the element 2" in the centre of the H stems of the lining 26 snap over the crossbars 12" of the element 2". The lining 27 is put in its place in the element 2" after the adjoining element 1" has been put in its place with its T heads 7" adjacent to the short sides of the openings 11". When the lining 27 has been put in its place in the element 2", the portions 28 with their internal circular-arc-shaped surfaces will therefore abut against the projecting portions of the T heads 7", thereby forming a hinge having its centre in the axis 3". The lining 27 results in an excellent control of the displacement of the elements 1" and 2" relative to each other in the longitudinal direction of the conveyor belt by decreasing the width of the opening 11".

Figs 12 and 13 illustrate a further variant of a side plate 30 for the element 2". The side plate 30 is of essentially the same extent in the longitudinal direction of the conveyor belt as the side plate 23 in Figs 6 and 7, but is integrated with a terminal member 31 which corresponds to the bush 20 and which locks the side plate 30 relative to the element 2". Moreover, the side plate 30 has a central vertical stiffening 32.

The element 2'" shown in Fig 14 is of an increasing width over at least part of its length, which enables a good pulling-power transmission both along straight belt path portions and along curved belt path portions, if the curving in the latter case is adapted to the increase of the width of the element 2'". A corresponding variation in width is also possible in an element of the first type.

In the above-described embodiments, the elements of the first and/or the elements of the second type are adapted to carry the conveyed load by themselves. The elements can be designed to be anything from very foraminous, for instance by having the greatest possible open surfaces between the T stems 6 and maximum openings 11, to practically completely closed, for instance by having only as large openings 11 as are necessary for the insertion of the T heads combined with the smallest possible open surfaces between the T stems 6, or by having the shortest possible T stems combined with minimum openings 11. It will be appreciated that the size of the openings can be reduced even more in the case that the conveyor belt need not be able to follow curves in the own plane of the belt. An otherwise almost completely closed belt can also be made more or less foraminous by means of perforations.

A large, even and unbroken carrying surface for soft products can be especially attained by the bar 4 of the elements of the first type 1 and the web 10 of the elements of the second type 2 being given essentially the same dimensions in the longitudinal direction of the conveyor belt.

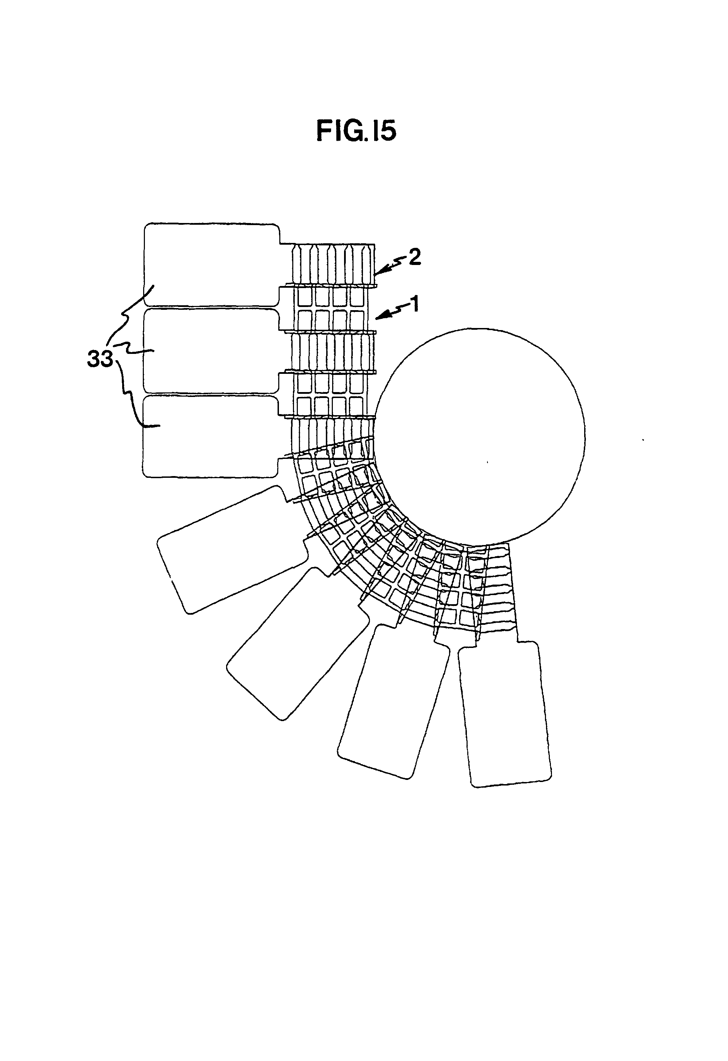

The embodiment of an inventive conveyor belt as illustrated in Fig. 15 differs from the other embodiments described above by the elements of the first and the second type being not intended to carry the load by themselves or by themselves only. Instead, the beams 2 are extended sideways in the form of carrying plates 33 which are adapted to carry the load. Of course, in this case also the elements of type 1 and type 2 could be used as load carriers for convenient products. It goes without saying that the carrying plates 33 can be replaced by any load carriers whatever, which like the carrying plates 33 can be integrated with associated elements of type 1 or type 2, or in some other way be fixedly connected with at least some of these, or be detachably mounted, such that the load carrier concerned can be selected according to the product to be conveyed.

Preferably, the load carriers are associated with the beams, i.e. the elements of type 2, but they could also be connected to the elements of type 1, or to the elements of both types. They may also be arranged on only one side of the elements of types 1 and 2, as shown in Fig. 15, or on both sides of these elements.

The embodiments described above are but examples of conveyor belts according to the present invention, and obviously a number of modifications are possible within the scope of the invention as defined in the appended claims.

## Claims

1. A conveyor belt comprising a plurality of interconnected elements (1, 2; 2'; 1", 2") which are arranged successively in the longitudinal direction of the conveyor belt and which are movable relative to each other at least about axes (3; 3") extending transversely of the longitudinal direction of the conveyor belt and in parallel with the plane of the conveyor belt, **characterised in that** the elements (1, 2; 2'; 1", 2") are alternatingly of a first type (1; 1") and a second type (2; 2'; 2"), that each element of the first type (1; 1") has a bar (4; 4") extended substantially in parallel with the axes (3; 3") and having a plurality of opposite projections (5; 5") which are T-shaped, have their T stem (6; 6") extended substantially in the longitudinal direction of the conveyor belt and their T head (7; 7") extended at a distance from and substantially along the bar, and that each element of the second type (2; 2'; 2") is in the form of a beam of inversed U-shape with flanges (9; 9'; 9") and a web (10; 10';, 10") which connects the flanges and has openings (11; 11'; 11") of a smaller width than the T heads for receiving the same by a reciprocating movement in the direction of the extent of the T heads relative to an element of the first type, or for receiving the T heads via parts (11') of the openings of at least the same width as the T heads.

2. The conveyor belt as claimed in claim 1, **characterised in that** the flanges (9; 9'; 9") of the inversely U-shaped beam are essentially unbroken.

3. The conveyor belt as claimed in claim 1 or 2, **characterised in that** each of the flanges (9; 9'; 9") of the inversely U-shaped beam is bent in V-shape along a line (19) in parallel with the longitudinal direction of the beam.

4. The conveyor belt as claimed in any one of claims 1-3, **characterised in that** the T heads (7) are downwardly bent relative to a plane formed of the bar (4) and the T stems (6).

5. The conveyor belt as claimed in any one of claims 1-4, **characterised in that** each opening (11; 11'; 11") in the U-shaped beam has an extent in the longitudinal direction of the beam which is smaller than the extent of the T head (7; 7") and greater than half the sum of the extent of the T head and T stem (6; 6") in the same direction.

6. The conveyor belt as claimed in any one of claims 1-5, **characterised in that** each element of the first type (1) comprises, at the lateral edge of the conveyor belt, a side plate (14) which is upwardly bent perpendicularly to the plane of the conveyor belt.

7. The conveyor belt as claimed in any one of claims 1-6, **characterised in that** each element of the second type (2; 2'; 2") is connected, at the lateral edge of the conveyor belt, to a vertical side plate (16; 23; 30).

8. The conveyor belt as claimed in claim 7, **characterised in that** the side plate (16) has grooves (17) for receiving extensions of the flanges (9) of the beam.

9. The conveyor belt as claimed in claim 7, **characterised in that** the side plate (23) has a projection (24) which is insertable through a slot (21, 22) into the web (10') of the beam as well as into a bush (20) inserted in the end of the beam.

10. The conveyor belt as claimed in any one of claims 1-9, **characterised in that** each opening (11; 11'; 11") in the beam (2; 2'; 2") has an extent in the longitudinal direction of the conveyor belt which is greater than the extent of the T head (7; 7") and smaller than or equal to the extent of the beam in the same direction.

11. The conveyor belt as claimed in claim 10, **characterised in that** each opening (11") in the beam (2") is of essentially the same extent in the longitudinal direction of the conveyor belt as the beam and has a lining (26) which reduces the extent of the opening (11") in the longitudinal direction of the beam.

12. The conveyor belt as claimed in claim 11, **characterised in that** the lining (26) is insertable into the openings (11") of the beam (2") from the inside of the U beam after connecting each element of the second type (2") to two adjoining elements of the first type (1").

13. The conveyor belt as claimed in claim 12, **characterised in that** the part of the lining (26) that pertains to each opening (11") is shaped like an H, which centrally has lugs (29) for securing the lining in the openings.

14. The conveyor belt as claimed in any one of claims 1-13, **characterised in that** the elements of the first and the second type are made of metal sheet.

15. The conveyor belt as claimed in any one of claims 1-13, **characterised in that** the elements of the first type are made of plastic and the elements of the second type are made of metal sheet.

16. The conveyor belt as claimed in claim 14 or 15, **characterised in that** the metal sheet is spring steel.

17. The conveyor belt as claimed in any one of claims 1-13, **characterised in that** the elements of the first and the second type are made of plastic.

18. The conveyor belt as claimed in any one of claims 7-9, **characterised in that** the side plates (16, 23; 30) are made of plastic.

19. The conveyor belt as claimed in any one of claims 1-18, **characterised in that** each element of the first and/or the second type is of a varying width along its longitudinal direction.

20. The conveyor belt as claimed in any one of claims 1-19, **characterised in that** the bar (4) of the elements of the first type (1) and the web (10) of the elements of the second type (2) have essentially the same dimensions in the longitudinal direction of the conveyor belt.

21. The conveyor belt as claimed in any one of claims 1-5, **characterised in that** the elements of the first or the second type (1; 2) support load carriers (33) which extend outside the elements of the first and the second type at least at one lateral edge of said elements.

22. The conveyor belt as claimed in claim 1, **characterised in that** the parts (11') of an opening (11) which are of at least the same width as the T heads (7) are offset in the longitudinal direction of the conveyor belt relative to the corresponding parts (11') of adjoining openings (11).

## Patentansprüche

1. Förderband, das eine Vielzahl miteinander verbundener Elemente (1, 2; 2'; 1", 2") umfasst, die aufeinanderfolgend in der Längsrichtung des Förderbandes angeordnet sind und die in Bezug zueinander an wenigstens zwei Achsen (3; 3") bewegt werden können, die sich quer zu der Längsrichtung des Förderbandes und parallel zu der Ebene des Förderbandes erstrecken, **dadurch gekennzeichnet, dass** die Elemente (1, 2; 2', 1", 2") abwechselnd von einem ersten Typ (1, 1") und einem zweiten Typ (2; 2'; 2") sind, dass jedes Element das ersten Typs (1; 1') eine Leiste (4; 4') aufweist, die sich im Wesentlichen parallel zu den Achsen (3; 3") erstreckt und eins Vielzahl einander gegenüberliegender Vorsprünge (5; 5") aufweist, die T-förmig sind, wobei ihr T-Schaft (6; 6") sich Im Wesentlichen in der Längsrichtung des Förderbandes erstreckt und sich ihr T-Kopf (7; 7") in einem Abstand zu der Leiste und im Wesentlichen an dieser entlang erstreckt, und dass jedes Element des zweiten Typs (2; 2'; 2") die Form eines Trägers umgekehrter U-Form mit Flanschen (9; 9', 9") und einem Steg (10; 10'; 10") hat, der die Flansche verbindet und Öffnungen (11; 11'; 11") mit geringerer Breite als die T-Köpfe aufweist, um diese durch eine Hin- und Herbewegung in der Richtung der Ausdehnung der T-Köpfe in Bezug auf ein Element des ersten Typs aufzunehmen oder um die T-Köpfe über Teile (11') der Öffnungen mit wenigstens der gleichen Breite wie die T-Köpfe aufzunehmen.

2. Förderband nach Anspruch 1, **dadurch gekennzeichnet, dass** die Flansche (9; 9'; 9") des umgekehrt U-förmigen Trägers im Wesentlichen durchgehend sind.

3. Förderband nach Anspruch 1 oder 2, **dadurch gekennzeichnet, dass** jeder Flansche (9; 9'; 9") des umgekehrt U-förmigen Trägers entlang einer Linie (19) parallel zur Längsrichtung des Trägers in V-Form gebogen ist.

4. Förderband nach einem der Ansprüche 1-3, **dadurch gekennzeichnet, dass** die T-Köpfe (7) in Bezug auf eine Ebene, die durch die Leiste (4) und die T-Schafte (6) gebildet wird, nach unten gebogen sind.

5. Förderband nach einem der Ansprüche 1-4, **dadurch gekennzeichnet, dass** jede Öffnung (11; 11'; 11") in dem U-förmigen Träger eine Ausdehnung in der Längsrichtung des Trägers hat, die geringer ist als die Ausdehnung des T-Kopfes (7; 7") und größer als die Hälfte der Summe der Ausdehnung des T-Kopfes und des T-Schaftes (6; 6") in der gleichen Richtung.

6. Förderband nach einem der Ansprüche 1-5, **dadurch gekennzeichnet, dass** jedes Element des ersten Typs (1) an der Seitenkante des Förderbandes eine Seitenplatte (14) umfasst, die senkrecht zur Ebene des Förderbandes nach oben gebogen ist.

7. Förderband nach einem der Ansprüche 1-6, **dadurch gekennzeichnet, dass** jedes Element des zweiten Typs (2; 2'; 2") an der Seitenkante des Förderbandes mit einer vertikalen Seitenplatte (16; 23; 30) verbunden ist.

8. Förderband nach Anspruch 7, **dadurch gekennzeichnet, dass** die Seitenplatte (16) Nuten (17) zur Aufnahme von Verlängerungen der Flansche (9) des Trägers aufweist.

9. Förderband nach Anspruch 7, **dadurch gekennzeichnet, dass** die Seitenplatte (23) einen Vorsprung (24) aufweist, der durch einen Schlitz (21, 22) in den Steg (10') des Trägers sowie in eine Buchse (20) eingeführt werden kann, die in das Ende des Trägers eingeführt ist.

10. Förderband nach einem der Ansprüche 1-9, **dadurch gekennzeichnet, dass** jede Öffnung (11; 11'; 11") in dem Träger (2; 2'; 2") eine Ausdehnung in der Längsrichtung des Förderbandes hat, die größer ist als die Ausdehnung des T-Kopfes (7; 7") und kleiner als die Ausdehnung des Trägers in der gleichen Richtung oder genau so groß wie diese.

11. Förderband nach Anspruch 10, **dadurch gekennzeichnet, dass** jede Öffnung (11") in dem Träger (2") im Wesentlichen die gleiche Ausdehnung in der Längsrichtung des Förderbandes hat wie der Träger und eine Auskleidung (26) aufweist, die die Ausdehnung der Öffnung auf (11") in der Längsrichtung des Trägers verringert.

12. Förderband nach Anspruch 11, **dadurch gekennzeichnet, dass** die Auskleidung (26) in die öffnungen (11") des Trägers (2") aus dem Inneren des U-Trägers heraus eingeführt werden kann, nachdem jedes Element des zweiten Typs (2") mit zwei benachbarten Elementen des ersten Typs (1") verbunden ist.

13. Förderband nach Anspruch 12, **dadurch gekennzeichnet, dass** der Teil der Auskleidung (26), der zu jeder Öffnung (11") gehört, wie ein "H" geformt ist, das mittig Vorsprünge (29) zum Befestigen der Auskleidung in den Öffnungen aufweist.

14. Förderband nach einem der Ansprüche 1-13, **dadurch gekennzeichnet, dass** die Elemente des ersten und des zweiten Typs aus Blech bestehen.

15. Förderband nach einem der Ansprüche 1-13, **dadurch gekennzeichnet, dass** die Elemente des ersten Typs aus Kunststoff bestehen, und die Elemente des zweiten Typs aus Blech bestehen.

16. Förderband nach Anspruch 14 oder 15, **dadurch gekennzeichnet, dass** das Blech Federstahl ist.

17. Förderband nach einem der Ansprüche 1-13, **dadurch gekennzeichnet, dass** die Elemente des ersten und des zweiten Typs aus Kunststoff bestehen.

18. Förderband nach einem der Ansprüche 7-9, **dadurch gekennzeichnet, dass** die Seitenplatten (16, 23; 30) aus Kunststoff bestehen.

19. Förderband nach einem der Ansprüche 1-18, **dadurch gekennzeichnet, dass** jedes Element des ersten und/oder des zweiten Typs veränderliche Breite in seiner Längsrichtung hat.

20. Förderband nach einem der Ansprüche 1-19, **dadurch gekennzeichnet, dass** die Leiste (4) der Elemente des ersten Typs (1) und der Steg (10) der Elemente des zweiten Typs (2) im Wesentlichen die gleichen Abmessungen in der Längsrichtung des Förderbandes haben.

21. Förderband nach einem der Ansprüche 1-5, **dadurch gekennzeichnet, dass** die Elemente des ersten oder des zweiten Typs (1; 2) Lastträger (33) tragen, die sich wenigstens an einer Seitenkante der Elemente außerhalb der Elemente des ersten und des zweiten Typs erstrecken.

22. Förderband nach Anspruch 1, **dadurch gekennzeichnet, dass** die Teile (11') einer Öffnung (11), die wenigstens die gleiche Breite haben wie die T-Köpfe (7), in der Längsrichtung des Förderbandes in Bezug auf die entsprechenden Teile (11') benachbarter Öffnungen (11) versetzt sind.

## Revendications

1. Bande transporteuse comportant plusieurs éléments interconnectés (1, 2; 2'; 1'', 2'') qui sont disposés de manière successive dans la direction longitudinale de la bande transporteuse et qui sont mobiles l'un par rapport à l'autre au moins autour d'axes (3; 3'') s'étendant transversalement à la direction longitudinale de la bande transporteuse et parallèlement au plan de la bande transporteuse, **caractérisée en ce que** les éléments (1, 2; 2'; 1'', 2'') sont alternativement d'un premier type (1; 1'') et d'un deuxième (2; 2'; 2''), **en ce que** chaque élément du premier type (1; 1'') a une barre (4; 4'') s'étendant sensiblement parallèlement aux axes (3; 3'') et ayant plusieurs saillies opposées (5; 5'') qui sont en forme de T, ont leur tige de T (6; 6'') qui s'étend sensiblement dans la direction longitudinale de la bande transporteuse et leur tête de T (7; 7'') qui s'étend à une distance et sensiblement le long de la barre, et **en ce que** chaque élément du deuxième type (2; 2'; 2'') est sous la forme d'une poutrelle en forme de U inversé avec des flasques (9; 9'; 9'') et une âme (10; 10'; 10'') qui relie les flasques et présente des ouvertures (11; 11'; 11'') d'une largeur plus petite que les têtes de T afin de les recevoir par un mouvement alternatif dans la direction de l'extension des têtes de T par rapport à un élément du premier type, ou afin de recevoir les têtes de T par l'intermédiaire de parties (11') des ouvertures au moins de la même largeur que les têtes de T.

2. Bande transporteuse selon la revendication 1, **caractérisée en ce que** les flasques (9; 9'; 9'') de la poutrelle en forme de U inversé sont essentiellement ininterrompus.

3. Bande transporteuse selon la revendication 1 ou 2, **caractérisée en ce que** chacun des flasques (9; 9'; 9'') de la poutrelle en forme de U inversé est plié en forme de V le long d'une ligne (19) parallèle à la direction longitudinale de la poutrelle.

4. Bande transporteuse selon l'une quelconque des revendications 1 à 3, **caractérisée en ce que** les têtes de T (7) sont pliées vers le bas par rapport à un plan formé par la barre (4) et les tiges de T (6).

5. Bande transporteuse selon l'une quelconque des revendications 1 à 4, **caractérisée en ce que** chaque ouverture (11; 11'; 11'') dans la poutrelle en forme de U a une étendue dans la direction longitudinale de la poutrelle qui est plus petite que l'étendue de la tête de T (7; 7'') et plus grande que la moitié de la somme de l'étendue de la tête de T et la tige de T (6; 6'') dans la même direction.

6. Bande transporteuse selon l'une quelconque des revendications 1 à 5, **caractérisée en ce que** chaque élément du premier type (1) comporte, au niveau du bord latéral de la bande transporteuse, une plaque latérale (14) qui est pliée vers le haut perpendiculairement au plan de la bande transporteuse.

7. Bande transporteuse selon l'une quelconque des revendications 1 à 6, **caractérisée en ce que** chaque élément du deuxième type (2; 2'; 2'') est relié, au niveau du bord latéral de la bande transporteuse, à une plaque latérale verticale (16; 23; 30).

8. Bande transporteuse selon la revendication 7, **caractérisée en ce que** la plaque latérale (16) a des rainures (17) destinées à recevoir des extensions des flasques (9) de la poutrelle.

9. Bande transporteuse selon la revendication 7, **caractérisée en ce que** la plaque latérale (23) a une saillie (24) qui peut être insérée à travers une fente (21, 22) dans l'âme (10') de la poutrelle ainsi que dans une douille (20) insérée dans l'extrémité de la poutrelle.

10. Bande transporteuse selon l'une quelconque des revendications 1 à 9, **caractérisée en ce que** chaque ouverture (11; 11'; 11'') dans la poutrelle (2; 2'; 2'') a une étendue dans la direction longitudinale de la bande transporteuse qui est plus grande que l'étendue de la tête de T (7; 7'') et plus petite ou égale à l'étendue de la poutrelle dans la même direction.

11. Bande transporteuse selon la revendication 10, **caractérisée en ce que** chaque ouverture (11') dans la poutrelle (2'') a essentiellement la même étendue dans la direction longitudinale de la bande transporteuse que la poutrelle et a un revêtement (26) qui réduit l'étendue de l'ouverture (11') dans la direction longitudinale de la poutrelle.

12. Bande transporteuse selon la revendication 11, **caractérisée en ce que** le revêtement (26) peut être inséré dans les ouvertures (11'') de la poutrelle (2'') depuis l'intérieur de la poutrelle en U après raccordement de chaque élément du deuxième type (2'') aux éléments adjacents du premier type (1'').

13. Bande transporteuse selon la revendication 12, **caractérisée en ce que** la partie du revêtement (26) qui appartient à chaque ouverture (11'') est en forme de H, qui a de manière centrale des pattes (29) pour la fixation du revêtement dans les ouvertures.

14. Bande transporteuse selon l'une quelconque des revendications 1 à 13, **caractérisée en ce que** les éléments du premier et du deuxième type sont fabriqués en tôle.

15. Bande transporteuse selon l'une quelconque des revendications 1 à 13, **caractérisée en ce que** les éléments du premier type sont fabriqués en matière plastique et les éléments du deuxième type sont fabriquée en tôle.

16. Bande transporteuse selon la revendication 14 ou 15, **caractérisée en ce que** la tôle est en acier à ressort.

17. Bande transporteuse selon l'une quelconque des revendications 1 à 13, **caractérisée en ce que** les éléments du premier et du deuxième type sont fabriqués en matière plastique.

18. Bande transporteuse selon l'une quelconque des revendications 7 à 9, **caractérisée en ce que** les plaques latérales (16; 23; 30) sont fabriquées en matière plastique.

19. Bande transporteuse selon l'une quelconque des revendications 1 à 18, **caractérisée en ce que** chaque élément du premier et/ou du deuxième type est d'une largeur variable le long de sa direction longitudinale.

20. Bande transporteuse selon l'une quelconque des revendications 1 à 19, **caractérisée en ce que** la barre (4) des éléments du premier type (1) et l'âme (10) des éléments du deuxième type (2) ont essentiellement les mêmes dimensions dans la direction longitudinale de la bande transporteuse.

21. Bande transporteuse selon l'une quelconque des revendications 1 à 5, **caractérisée en ce que** les éléments du premier ou du deuxième type (1; 2) supportent des supports de charge (33) qui s'étendent à l'extérieur des éléments du premier et du deuxième type au moins au niveau d'un bord latéral desdits éléments.

22. Bande transporteuse selon la revendication 1, **caractérisée en ce que** les parties (11') d'une ouverture (11) qui sont d'au moins la même largeur que les têtes de T (7) sont décalées dans la direction longitudinale de la bande transporteuse par rapport aux parties correspondantes (11') des ouvertures (11) adjacentes.
